# EUROPEAN PATENT APPLICATION

(11) **EP 4 485 327 A1**
(43) Date of publication of application: **01.01.2025**
(21) Application number: 23210806.8
(22) Date of filing: 20.11.2023
(51) Int. Cl.: G06Q 30/0242, G06N 20/00

(54) **INFORMATION PROCESSING SYSTEM, PROGRAM, AND INFORMATION PROCESSING METHOD**

(30) Priority: 30.06.2023 JP 2023108571
(71) Applicant: Fujifilm Business Innovation Corp., Tokyo 107-0052 (JP)
(72) Inventor: KAWAGUCHI, Tadafumi, Yokohama, 221-0045 (JP); ANDO, Masato, Ebina, 243-0417 (JP); YAMAZAKI, Shinya, Yokohama, 221-0045 (JP); YOSHIDA, Maiko, Yokohama, 221-0045 (JP); NAKAHARA, Takuma, Yokohama, 221-0045 (JP)
(74) Representative: Meissner Bolte Partnerschaft mbB

(57) **Abstract**

An information processing system includes one or more processors configured to: obtain action histories of multiple users on a website; receive setting of a conversion which is a specific action performed by the users on the website; extract a second action from first actions on the basis of the first actions and information about, for each action history, whether the received conversion is included in the action history, the first actions being included in the obtained action histories; simulate the relationship between a change of a numeric value related to the extracted second action and a change of a numeric value related to the conversion; and output the simulation result.

## Description

### Background

### (i) Technical Field

The present disclosure relates to an information processing system, a program, and an information processing method.

### (ii) Related Art

These days, businesses use web pages for provision of advertisements or other information and provision of services. Therefore, each business analyzes history data about users' web page browsing, and uses the analysis result when their web pages are updated.

A technique of the related art is disclosed in Japanese Patent No, 6866069.

### Summary

Accordingly, it is an object of the present disclosure to provide a system which enables a user to efficiently improve a website compared with a system which outputs only users' actions estimated to contribute to conversions.

According to a first aspect of the present disclosure, there is provided an information processing system comprising: one or more processors configured to: obtain action histories of a plurality of users on a website; receive setting of a conversion which is a specific action performed by the plurality of users on the website; extract a second action from first actions on a basis of the first actions and information about, for each action history, whether the received conversion is included in the action history, the first actions being included in the obtained action histories; simulate a relationship between a change of a numeric value related to the extracted second action and a change of a numeric value related to the conversion; and output the simulation result.

According to a second aspect of the present disclosure, in the information processing system of the first aspect, the one or more processors are configured to: in response to reception of specification of the second action, output the simulation result about the received second action.

According to a third aspect of the present disclosure, in the information processing system of the first or second aspect, the one or more processors are configured to: in response to reception of specification of a change amount of the numeric value related to the second action, output the simulation result about the received change amount of the numeric value related to the second action.

According to a fourth aspect of the present disclosure, in the information processing system of any one of the first to third aspects, the one or more processors are configured to: in response to reception of specification of a change amount of the numeric value related to the conversion, output, as the simulation result, a change amount of the numeric value related to the second action accomplishing the received change amount.

According to a fifth aspect of the present disclosure, in the information processing system of any one of the first to fourth aspects, the one or more processors are configured to: based on the simulation result, extract one or more features of a web page included in the website, and output a relationship between the one or more extracted features and a change of the numeric value related to the conversion.

According to a sixth aspect of the present disclosure, in the information processing system of the fifth aspect, the one or more processors are configured to: based on weighting calculation in accordance with the one or more features, output a relationship between change of one or more features of the web page and a change appearing in the conversion.

According to a seventh aspect of the present disclosure, in the information processing system of any one of the first to sixth aspects, the one or more processors are configured to: extract the second action on a basis of a learning model, the learning model being a model which receives an action history and which outputs a possibility that a virtual user based on the received action history does an action which is set for the conversion.

According to an eighth aspect of the present disclosure, in the information processing system of the seventh aspect, the one or more processors are configured to: update weights through learning, the weights being set for the respective first actions in a process of calculation performed by the learning model, and extract the second action on a basis of the updated weights.

According to a ninth aspect of the present disclosure, in the information processing system of any one of the first to eighth aspects, the one or more processors are configured to: provide, as input, a first action history to a learning model which receives an action history and which outputs whether a virtual user based on the received action history does an action which is set for the conversion, and obtain a first result related to the conversion on a basis of the provided first action history; provide, as input, a second action history to the learning model, the second action history being generated on a basis of the first action history, and obtain a second result related to the conversion on a basis of the provided second action history; and simulate a relationship between a change of a numeric value related to the second action and a change of a numeric value related to the conversion, on a basis of the first result and the second result.

According to a tenth aspect of the present disclosure, there is provided a program causing a computer to execute a process comprising: obtaining action histories of a plurality of users on a website; receiving setting of a conversion which is a specific action performed by the plurality of users on the website; extracting a second action from first actions on a basis of the first actions and information about, for each action history, whether the received conversion is included in the action history, the first actions being included in the obtained action histories; simulating a relationship between a change of a numeric value related to the extracted second action and a change of a numeric value related to the conversion; and outputting the simulation result.

According to an eleventh aspect of the present disclosure, there is provided an information processing method comprising: obtaining action histories of a plurality of users on a website; receiving setting of a conversion which is a specific action performed by the plurality of users on the website; extracting a second action from first actions on a basis of the first actions and information about, for each action history, whether the received conversion is included in the action history, the first actions being included in the obtained action histories; simulating a relationship between a change of a numeric value related to the extracted second action and a change of a numeric value related to the conversion; and outputting the simulation result.

Compared with a system which outputs only users' actions estimated to contribute to conversions, the information processing system according to the first aspect may provide a system which enables a user to efficiently improve a website.

The information processing system according to the second aspect enables influence, which is exerted on conversions by the specified second action, to be output as a numeric value.

The information processing system according to the third aspect enables influence, which is exerted on conversions by the specified second action, to be output as a numeric value.

The information processing system according to the fourth aspect enables output of the change of a numeric value related to a second action which accomplishes the specified change of a numeric value of the conversion.

The information processing system according to the fifth aspect enables output of the relationship between a specified change of a numeric value of the conversion and changes of numeric values related to the features of a web page.

The information processing system according to the sixth aspect enables output of the relationship between changes of the features of the web page and a change appearing in the conversion.

The information processing system according to the seventh aspect enables extraction of second actions affecting conversions even in the case of a large number of action histories that are to be handled.

The information processing system according to the eighth aspect achieves improvement of accuracy of extraction of second actions affecting conversions even in the case of a large number of action histories that are to be handled.

The information processing system according to the ninth aspect enables a reduction of time required for output of the simulation result.

Compared with a system which outputs only users' actions estimated to contribute to conversions, the program according to the tenth aspect may provide a system which enables a user to efficiently improve a website.

Compared with a system which outputs only users' actions estimated to contribute to conversions, the information processing method according to the eleventh aspect may provide a system which enables a user to efficiently improve a website.

### Brief Description of the Drawings

Exemplary embodiments of the present disclosure will be described in detail based on the following figures, wherein:
Fig. 1 is a diagram for describing an exemplary configuration of an information processing system assumed in a first exemplary embodiment;
Fig. 2 is a diagram for describing an exemplary hardware configuration of a task support server;
Fig. 3 is a diagram for describing an exemplary hardware configuration of an information terminal;
Fig. 4 is a diagram for describing information related to a conversion on a web page;
Fig. 5 is a flowchart for describing an exemplary operation performed by a task support server;
Fig. 6 is a diagram for describing exemplary action histories of browsing users;
Fig. 7 is a diagram for describing exemplary action histories after grouping;
Fig. 8 is a diagram for describing an exemplary screen displaying the top N actions having high degrees of contribution to conversions;
Fig. 9 is a diagram for describing an exemplary screen used for input of a simulation condition and display of a simulation result;
Fig. 10 is a diagram for describing an exemplary method of generating pseudo-improved data used in a simulation of influence exerted on a conversion-related numeric value by a change of action-related numeric values;
Fig. 11 is a diagram for describing another exemplary method of generating pseudo-improved data used in a simulation of influence exerted on a conversion-related numeric value by a change of action-related numeric values;
Fig. 12 is a diagram for continuously describing the other exemplary method of generating pseudo-improved data used in a simulation of influence exerted on a conversion-related numeric value by a change of action-related numeric values;
Fig. 13 is a diagram for describing an operation related to prediction of conversion improvement;
Fig. 14 is a diagram for describing an exemplary screen used for input of a simulation condition and display of a simulation result;
Fig. 15 is a diagram for describing an exemplary screen used for input of a simulation condition and display of a simulation result;
Fig. 16 is a diagram for describing a change of display of a screen in the case where modality information is added to a simulation condition;
Fig. 17 is a diagram for describing a process of machine learning of a prediction model;
Fig. 18 is a diagram for describing extraction of the top N actions; and
Fig. 19 is a diagram for describing an exemplary conversion simulation using a prediction model.

### Detailed Description

Exemplary embodiments of the present disclosure will be described below by referring to the drawings.

### Terms

In the specification, "conversion" is used in the sense of a specific action performed by a user on a website. Examples of a specific action include member registration, e-mail magazine registration, product purchase, an inquiry, a download, an application, a reservation, and a transition to a specific page.

A conversion encompasses, not only leading up to a specific action without leaving a target site, but also leading up to a specific action after leaving a target site and returning to the target site.

In addition, a conversion may encompass a previous action leading up to an action, such as a download, an application, or a reservation. Such previous actions are, for example, an action leading up to a visit to a download page, but not leading up to a download, an action leading up to a visit to an application page or a reservation page, but not leading up to an application or a reservation, and an action leading up to a visit to a confirmation screen for input information.

In the embodiments below, a specific action is described in the sense of a transition to a specific web page.

### First Exemplary Embodiment

### System Configuration

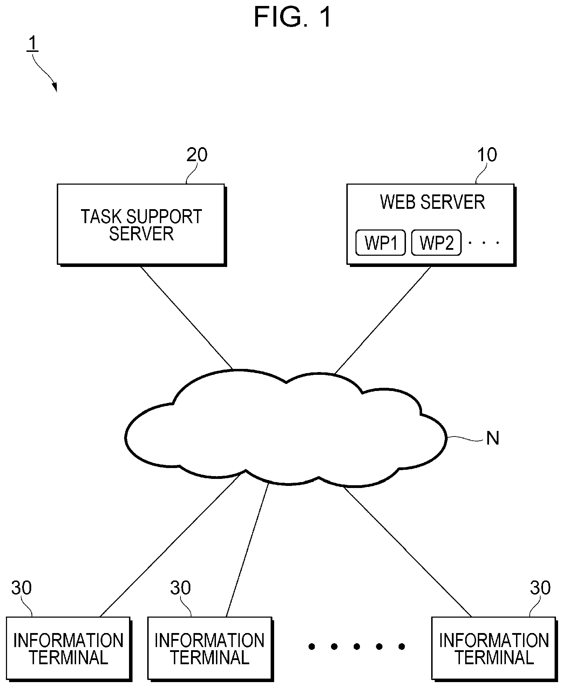

Fig. 1 is a diagram for describing an exemplary configuration of an information processing system 1 assumed in a first exemplary embodiment. The information processing system 1 illustrated in Fig. 1 includes a web server 10, a server (hereinafter referred to as "task support server") 20 which provides a service for supporting a task of improving conversions on web pages, information terminals 30, and a network N.

The web server 10 is a computer which displays, on a web browser, a web page, to which access is requested, in accordance with a request from the web browser serving as a client. In Fig. 1, web pages to be offered are denoted as WP1, WP2, etc. In the first exemplary embodiment, a group of web pages is called a website. An entry web page of a website is called a home page.

In Fig. 1, a web browser is installed in at least one of the information terminals 30. An information terminal 30 in which a web browser is installed is called a browsing terminal. In the first exemplary embodiment, a user who operates a browsing terminal is called a browsing user.

In the web server 10, histories of web page browsing performed by browsing users (hereinafter referred to as "action histories") are recorded. The web server 10 is an exemplary terminal connected to the network N.

The task support server 20 is a computer which provides, to users, the relationship between a change of the numeric value of conversions on a web page specified by an engineer or the like, and changes of the numeric values related to actions of browsing users.

In the first exemplary embodiment, "conversion improvement" is used in the sense of an increase of conversions.

In Fig. 1, the task support server 20 is operated from at least one of the information terminals 30.

In the first exemplary embodiment, an information terminal 30 that is used to access the task support server 20 is referred to as a working terminal. An engineer or the like, who analyzes actions contributing conversion improvement, is assumed as a user who operates the working terminal. In the first exemplary embodiment, the engineer or the like is referred to as a working user.

The task support server 20 is also an exemplary terminal connected to the network N.

Examples of an information terminal 30 include a desktop computer, a notebook computer, a tablet computer, and a smartphone.

The number of information terminals 30 that operate as client terminals operated by browsing users may be one or more. The number of information terminals 30 that operate as user terminals operated by working users may be one or more. The information terminals 30 are also exemplary terminals connected to the network N.

The network N is, for example, the Internet, a wireless local area network (LAN), or 4G, 5G, or another mobile communication system.

Fig. 1 illustrates the case in which the web server 10, the task support server 20, and the information terminals 30 are connected to the single network N. Alternatively, a network N which is used to browse web pages may be different from a network N which is used for access to the task support server 20.

### The Hardware Configuration of a Server

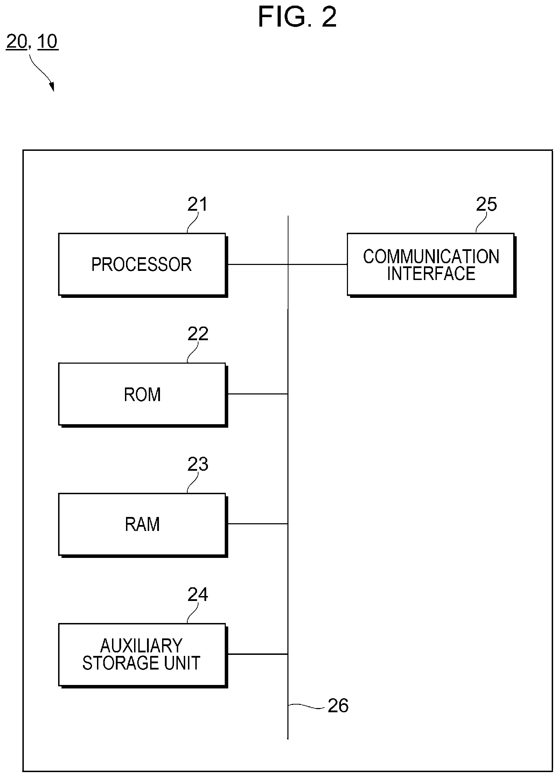

Fig. 2 is a diagram for describing an exemplary hardware configuration of the task support server 20. The hardware configuration of the web server 10 has a configuration common to that of the task support server 20.

The task support server 20 illustrated in Fig. 2 includes a processor 21, a read only memory (ROM) 22 storing, for example, a basic input output system (BIOS), a random access memory (RAM) 23 used as a work area of the processor 21, an auxiliary storage unit 24, and a communication interface 25. The devices are connected through a bus or another signal line 26.

The processor 21 is a device which implements various functions through execution of programs.

The processor 21, the ROM 22, and the RAM 23 function as a computer.

The auxiliary storage unit 24 is constituted, for example, by a hard disk drive or a semiconductor storage. The auxiliary storage unit 24 stores programs and various types of data. The "program" is used as a generic term of an operating system (OS) and application programs.

In the task support server 20, one of the application programs is a support program.

The communication interface 25 is an interface for communicating with the information terminals 30 which access task support information through the network N. The communication interface 25 is compatible with various communication standards. Examples of the communication standards include Ethernet^{™}, Wi-Fi^{™}, and a mobile communication system.

### The Hardware Configuration of an Information Terminal

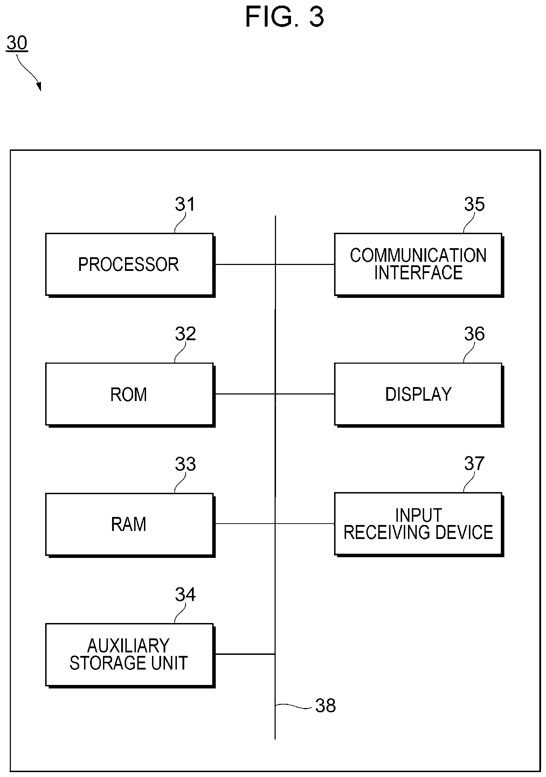

Fig. 3 is a diagram for describing an exemplary hardware configuration of an information terminal 30.

The hardware configuration of the information terminal 30 illustrated in Fig. 3 is roughly the same as that of the task support server 20 (see Fig. 2).

That is, the information terminal 30 includes a processor 31, a ROM 32 storing, for example, a BIOS, a RAM 33 used as a work area of the processor 31, an auxiliary storage unit 34, a communication interface 35, a display 36, and an input receiving device 37. The devices are connected through a bus or another signal line 38.

The display 36 is, for example, a liquid-crystal display or an organic light-emitting diode (OLED) display.

The input receiving device 37 is, for example, a mouse and a keyboard. When the information terminal 30 is a notebook computer, a tablet computer, or a smartphone, the input receiving device 37 is a transparent electrostatic capacitance touch sensor which does not prevent an image, which is displayed on the display 36, from being viewed. A device in which this type of touch sensor and a display are combined is called a touch panel.

### Information Related to a Conversion on a Web Page

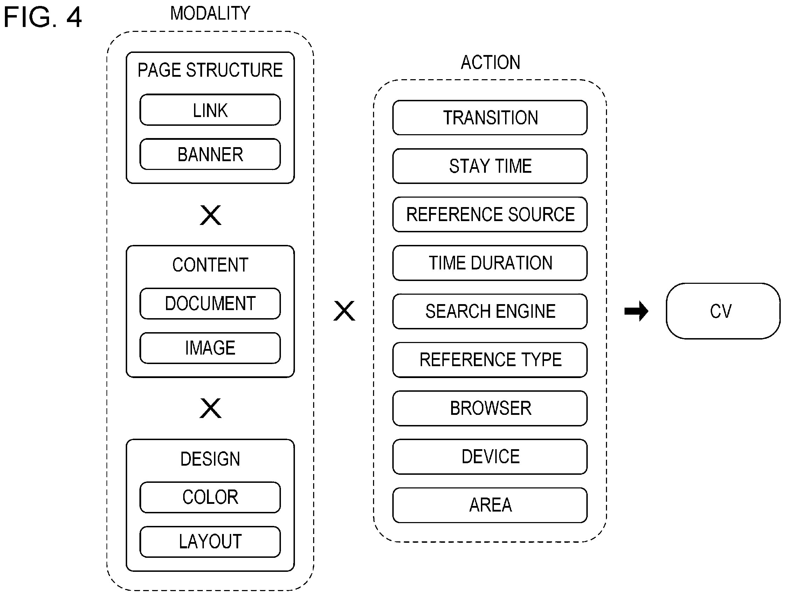

Fig. 4 is a diagram for describing information related to a conversion on a web page. In Fig. 4, conversion is represented by "CV".

As illustrated in Fig. 4, a conversion is related to the combination of "modality" and "action". In Fig. 4, a combination of information is represented by a symbol of x.

"Modality" is information representing features of a web page, and is constituted, for example, by the combination of its page structure, its content, and its design.

Fig. 4 illustrates "link" and "banner" as examples of the page structure. A link is information for linking web pages to each other, and is also called a "hyperlink". A banner is information for introducing a different website or a different web page in the same website. Many banners have links to websites or web pages which are to be introduced.

Fig. 4 illustrates "document" and "image" as examples of the content. A document includes text, which is described, for example, in Hypertext Markup Language (HTML), and a style sheet. The image encompasses a still image and a movie image.

Fig. 4 illustrates "color" and "layout" as examples of the design.

"Action" is information related to operations of users who browse web pages. Fig. 4 illustrates, as examples of the user actions, transition, stay time, reference source, time duration, search engine, reference type, browser, device, and area.

The transition encompasses page transition and page-to-page transition. The page transition refers to information indicating a transition to a specific web page. A web page which is a transition source is not necessarily required. The page-to-page transition refers to information indicating a transition to a specific web page from a different web page. The page-to-page transition may refer to information indicating a transition between three or more web pages, in addition to information indicating the case in which a transition is specified by a transition-source web page and a transition-destination web page.

The stay time is the amount of time spent on a specific web page. In other words, the stay time is a time for which a browsing user browses a specific web page.

The reference source refers to information indicating a link-source web page in the case in which a link is clicked to make a transition to a specific web page.

The time duration refers to information indicating a time duration in which a specific web page is displayed.

The search engine refers to information indicating the name or the like of a search engine used in reference of a specific web page.

The reference type refers to information indicating the type of a method used for reference of a specific web page. Examples of the reference type include search engine, direct input of a uniform resource locator (URL), and clicking a bookmark.

The browser refers to information indicating a web browser used in display of a specific web page.

The device refers to information indicating the type of an information terminal 30 used by a user who has referred to the web page.

The area refers to information indicating the position of the information terminal 30 on which the web browser operates. The position is not limited to the position measured by a positioning system, and may be an estimated position. The position is not limited to a physical position, and may be a logical position on a network.

When access to a database, which manages information (hereinafter referred to as "user information") about users who operate information terminals 30 used to browse web pages, is allowed, user information, such as the ages, the genders, and the addresses of the users, may be included as information related to conversions on a specific web page.

The number of combinations of the illustrated information alone is enormous. Therefore, it is not easy to estimate actions, which are highly related to conversions on a specific web page, on the basis of experiences and skills of an engineer or the like.

### Operation of the Task Support Server

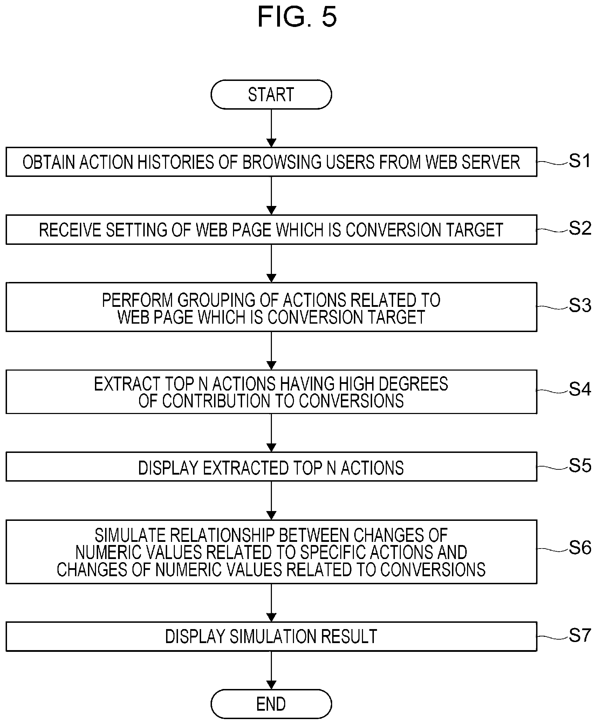

Fig. 5 is a flowchart for describing an exemplary operation performed by the task support server 20. A symbol, S, in Fig. 5 means "step". The operation illustrated in Fig. 5 is implemented by the processor 21 (see Fig. 2) executing programs.

In the first exemplary embodiment, the operation illustrated in Fig. 5 starts, for example. when an engineer or the like accesses the task support server 20.

### Step 1

The processor 21 obtains the action histories of browsing users from the web server 10 (step 1). The action histories of browsing users are stored in the web server 10 (see Fig. 1) as a so-called access log. In addition, replicated action histories are stored in the auxiliary storage unit 24 (see Fig. 2) of the task support server 20.

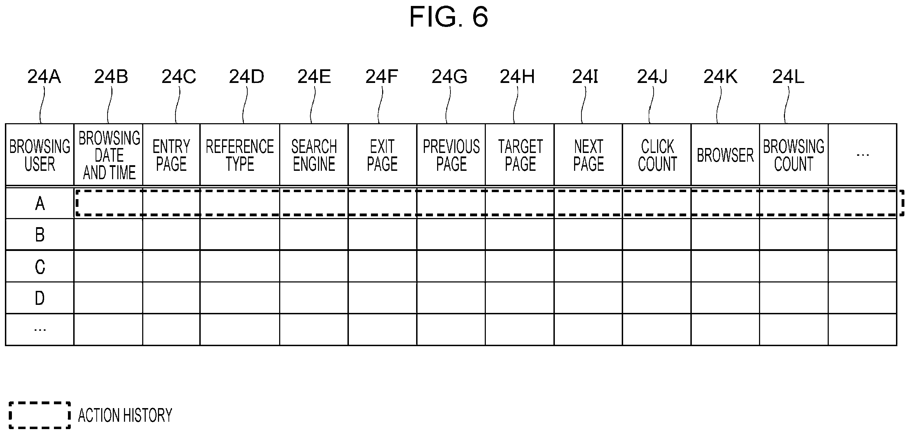

Fig. 6 is a diagram for describing exemplary action histories.

Fig. 6 illustrates, as exemplary actions constituting an action history, browsing date and time 24B, entry page 24C, reference type 24D, search engine 24E, exit page 24F, previous page 24G, target page 24H, next page 24I, click count 24J, browser 24K, and browsing count 24L.

In Fig. 6, each row corresponds to an action history for the corresponding browsing session performed by browsing user 24A (for example, A, B, C, ...). Therefore, multiple rows for action histories of the same browsing user appear. The columns indicate the corresponding actions constituting an action history. In Fig. 6, for description of the correspondences, a browsing user corresponding to an action history is illustrated. The same is true in other figures.

The browsing user 24A is information for identifying a user who browsed a specific web page. In the browsing user 24A, for example, the IP address of an information terminal 30 (see Fig. 1) operated by the user is stored.

In the browsing date and time 24B, information about date and time when the specific web page was browsed is stored.

In the entry page 24C, information about the first web page accessed in a series of page-to-page transitions made by the browsing user is stored.

In the exit page 24F, information about the last web page accessed in the series of page transitions made by the browsing user is stored.

In the previous page 24G, information indicating a web page browsed just before the transition to the specific web page is stored.

In the target page 24H, information indicating the specific web page is stored.

In the next page 24I, information indicating a web page which is a transition destination from the specific web page is stored.

In the click count 24J, information indicating the number of clicks made by the browsing user in the series of page transitions is stored.

In the browser 24K, information indicating the name or the like of a browser used in the web page browsing by the browsing user is stored.

In the browsing count 24L, information indicating the count of web pages browsed by the browsing user is stored.

### Steps 2 and 3

The processor 21 receives setting of a web page which is the conversion target (step 2). Specifically, the processor 21 receives, from the information terminal 30 operated by an engineer or the like, specification of a web page which is the conversion target.

Subsequently, the processor 21 performs grouping of actions related to the web page which is the conversion target (step 3). In the grouping, actions related to the web page, which is the conversion target, are summarized for each browsing user.

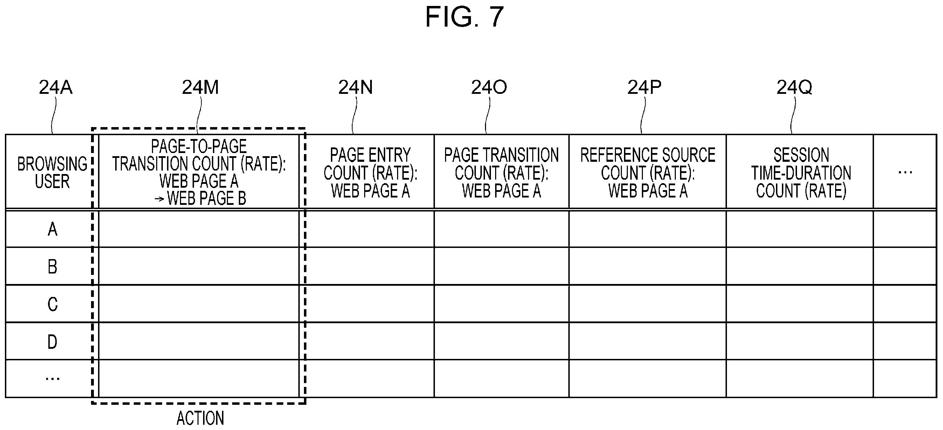

Fig. 7 is a diagram for describing exemplary action histories after the grouping. In Fig. 7, components corresponding to those in Fig. 6 are designated with the corresponding reference numerals.

The actions in the action histories illustrated in Fig. 7 are obtained by organizing actions related to the web page which is the conversion target. Fig. 7 illustrates, as exemplary actions included in the action histories, browsing user 24A, page-to-page transition count (or rate) 24M, page entry count (or rate) 24N, page transition count (or rate) 24O, reference source count (or rate) 24P, and session time-duration count (or rate) 24Q.

The page-to-page transition count (or rate) 24M is information about the count of each browsing user's transitions from Web page A to Web page B, or the transition rate obtained by dividing the transition count by the session count.

The page entry count (or rate) 24N is information about the count of each browsing user's entries to Web page A, or the transition rate obtained by dividing the entry count by the session count.

The page transition count (or rate) 24O is information about the count of each browsing user's transitions to Web page A, or the transition rate obtained by dividing the transition count by the session count.

The reference source count (or rate) 24P is information about the count of each browsing user's entries from Web page A which is a reference source, or the entry rate obtained by the entry count by the session count.

The session time-duration count (or rate) 24Q is information about the count of time durations of sessions of each browsing user or the time duration rate obtained by dividing the time duration count by the session count.

### Step 4

Then, the processor 21 extracts the top N actions having high degrees of contribution to conversions (step 4). The degree of contribution is a numeric value indicating how much a specific action contributes to conversions.

In the first exemplary embodiment, the processor 21 sorts the actions (that is, the columns), which are illustrated in Fig. 7, in the descending order of the degree of contribution, and extracts the top N actions.

The number of top N may be fixed or may be specified by an engineer or the like. If an engineer or the like is allowed to specify the number, a field for specifying the number of actions to be extracted is displayed on the display 36 (see Fig. 3) of the information terminal 30.

The top N actions are exemplary second actions extracted from first actions.

In the first exemplary embodiment, the numeric values of the degrees of contribution are updated by using the following rule every time a new action history is obtained: if the specific web page is accessed after one or more screen transitions, each of the numeric values of the degrees of contribution of the first actions related to the obtained new action history is added, for example, by "1"; if the specific web page is not accessed, for example, "1" is subtracted from each of the degrees of contribution of the first actions related to the obtained new action history.

As a result, the degree of contribution of a specific action having a high possibility of contribution to conversions increases; the degree of contribution of an action having a low possibility of contribution to conversions decreases. For example, the degree of contribution of Action Y which appears in the history of transitions to Web page A ten times is larger than that of Action X which appears in the history only once.

Thus, the top N actions are extracted on the basis of actions (first actions) included in the action histories and information about whether a conversion is included in each action history.

### Step 5, 6, and 7

Then, the processor 21 displays the extracted top N actions (step 5). Specifically, the top N actions are displayed on the display 36 of the information terminal 30 operated by the engineer or the like. This display enables the engineer or the like to confirm actions having high degrees of contribution to browsing of the web page which is the conversion target. In the first exemplary embodiment, the degrees of contribution of the actions are also displayed.

Subsequently, the processor 21 simulates the relationship between changes of the numeric values related to the specific actions and changes of the numeric values related to conversions (step 6).

In the first exemplary embodiment, the processor 21 simulates changes of the numeric values of conversions in the case where the numeric values related to the specific actions are changed. For example, the amounts of changes of the numeric values of conversions, which are predicted when the numeric values related to the specific actions increase by 10%, are calculated.

Upon completion of the simulation, the processor 21 displays the simulation result (step 7). Specifically, the amounts of changes of the numeric values related to the specific actions and the amounts of appearing changes of the numeric values of conversions are displayed on the display 36 of the information terminal 30 operated by the engineer or the like.

### Concrete Examples of the Operation

Concrete examples of the operation performed by the task support server 20 will be described below.

### The Display Screen of the Top N Actions

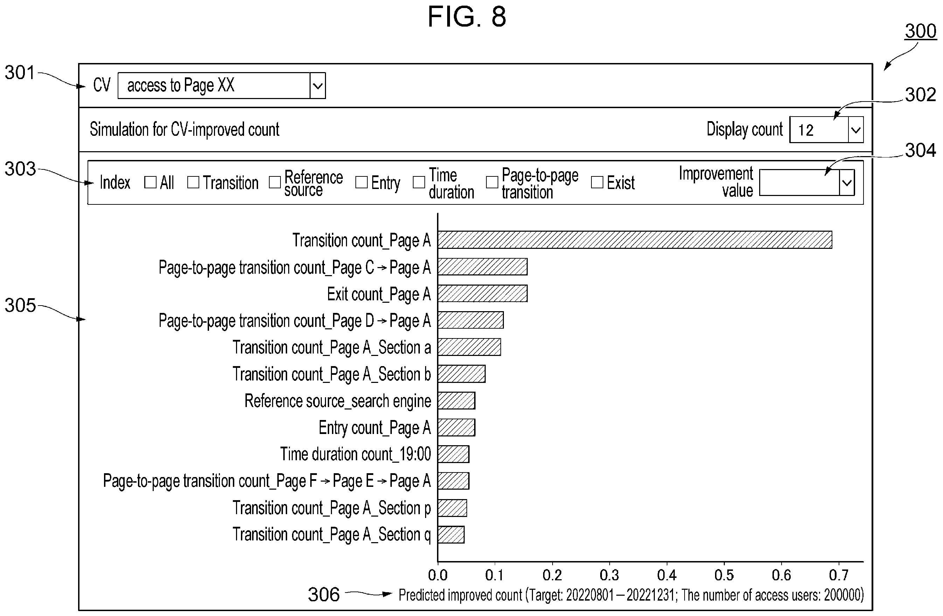

Fig. 8 is a diagram for describing an exemplary screen 300 displaying the top N actions having high degrees of contribution to conversions. The screen 300 illustrated in Fig. 8 is displayed on the display 36 (see Fig. 3) of the information terminal 30 (see Fig. 1) operated by an engineer or the like.

The screen 300 illustrated in Fig. 8 includes a conversion input field 301, a display-count input field 302, a simulation-target-action specification field 303, an input field 304 for an improvement value required for specific actions, a top-N-actions display field 305, and a field 306 for the total of browsing users. The content and the number of the displayed items are exemplary.

In Fig. 8, in the conversion input field 301, "access to Page XX" is displayed. Page XX is Web page XX, for example, "Product list".

For the input field 301, a list of one or more web pages included in the website is prepared in advance. When the pull-down menu is opened, the list of one or more web pages is displayed.

The display-count input field 302 is used to specify the number of actions which are to be displayed and which have high degrees of contribution to conversions. This numeric value corresponds to N in step 4 (see Fig. 5) and step 5 (see Fig. 5). In Fig. 8, "12" has been input. "12" in Fig. 8 is the initial value. Therefore, an engineer or the like may change the display count.

In Fig. 8, the numeric value in the input field 302 may be selected by opening a pull-down menu.

The action specification field 303 is used to specify one or more actions used in the simulation. In Fig. 8, seven checkboxes corresponding to "All", "Transition", "Reference sources", "Entry", "Time duration", "Page-to-page transition", and "Exit" are displayed. Since they are checkboxes, not only one selection, but also multiple selections may be made. When "All" is selected, the other six actions are made selected. At the time point indicated by Fig. 8, since the top N actions have just been displayed, all the checkboxes are blank.

The improvement-value input field 304 is used for input of the degree of requested improvement of the numeric values related to the selected actions. At the time point indicated by Fig. 8, since the top N actions have just been displayed, the numeric value representing the degree of improvement is not displayed.

The top-N-actions display field 305 displays the top N (12 in Fig. 8) actions extracted in step 4 (see Fig. 5). In the right field of the top N actions, the degrees of contribution are displayed by using the lengths of bars in a bar chart.

Fig. 8 shows that the degree of contribution of "Transition count_Page A" is markedly larger than those of the other 11 actions.

The field 306 for the total of browsing users shows that the browsing users used in the analysis are totally 200,000 users, and that the target period is five months from "20220801" to "20221231".

### The Display Screen for a Simulation Result

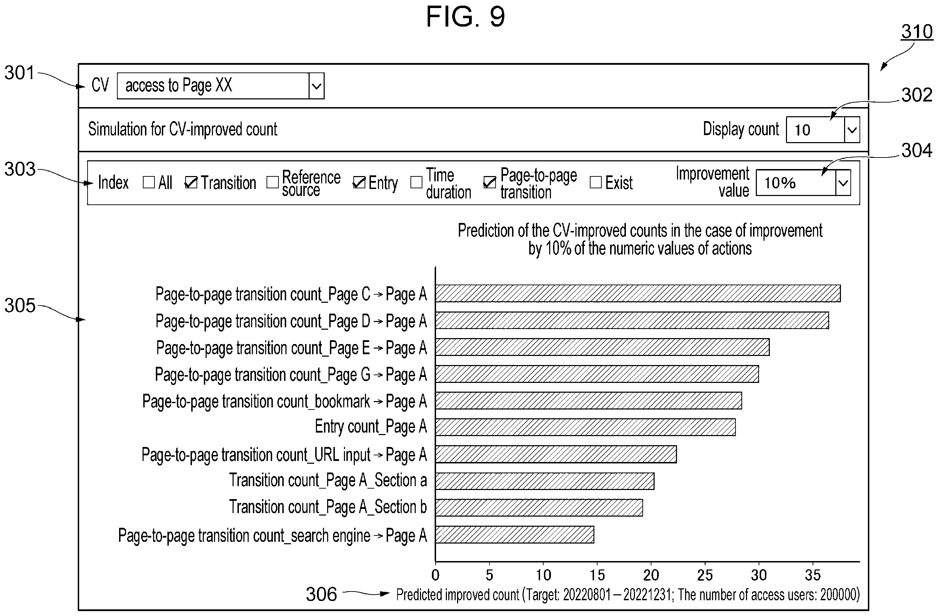

Fig. 9 is a diagram for describing an exemplary screen 310 used for input of a simulation condition and display of a simulation result. In Fig. 9, components corresponding to those in Fig. 8 are designated with corresponding reference numerals.

The screen 310 illustrated in Fig. 9 is also displayed on the display 36 (see Fig. 3) of the information terminal 30 (see Fig. 1) operated by an engineer or the like.

In Fig. 9, "10" has been input in the display-count input field 302. Thus, ten actions, to which a simulation result has been reflected, are displayed in the top-N-actions display field 305.

In Fig. 9, "Transition", "Entry", and "Page-to-page transition" are selected in the action specification field 303. In the improvement-value input field 304, "10%" has been input as a numeric value indicating the degree of improvement.

As a result, in the top-N-actions display field 305, the prediction values of the conversion-improved counts predicted for the actions are displayed in a bar chart under the title, "Prediction of the CV-improved counts in the case of improvement by 10% of the numeric values of actions".

The display in Fig. 9 shows that, if "Page-to-page transition count" from Web page C to Web page A is increased by 10%, conversions on Web page XX increase by 35 points or more.

The display in the display field 305 in the screen 310 enables an engineer or the like to easily confirm, not only actions of browsing users which are estimated to contribute to conversions, but also the difference between actions in the degree of contribution to conversion improvement.

As a result, compared with a system which outputs only users' actions estimated to contribute to conversions, an engineer or the like is allowed to efficiently do work related, for example, to actions contributing to conversion improvement and to modification of Web page XX.

### Generation of Pseudo-Improved Data Necessary for Simulation

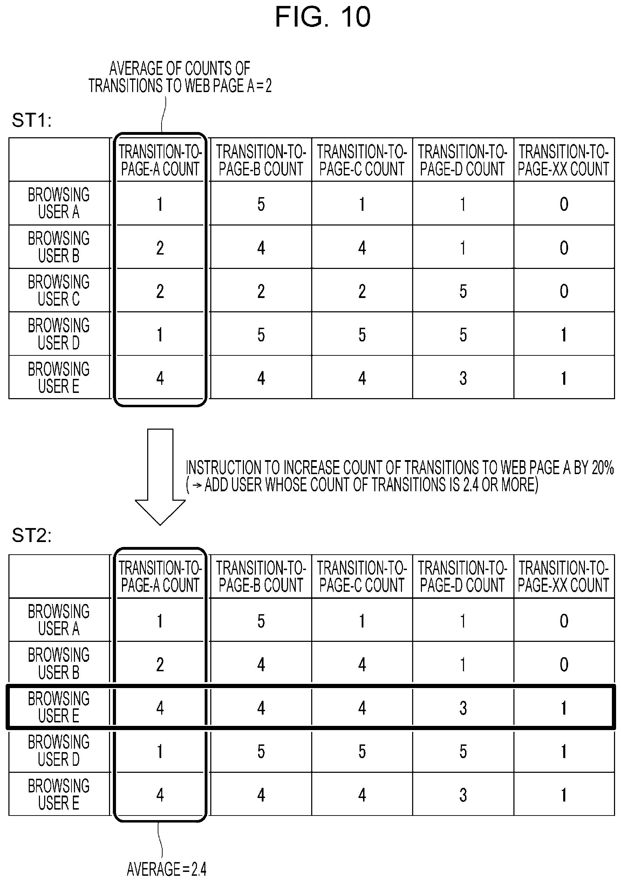

Fig. 10 is a diagram for describing an exemplary method of generating pseudo-improved data used for simulation of influence exerted on a conversion-related numeric value by a change of action-related numeric values.

Fig. 10 illustrates Process stage ST1 and Process stage ST2.

Process stage ST1 indicates the relationship between the count of transitions to each web page and browsing users, before execution of the simulation.

"Transition-to-Page-A count" shows the summaries of the counts of transmissions to Web page A. "Transition-to-Page-B count", "Transition-to-Page-C count", "Transition-to-Page-D count", and "Transition-to-Page-XX count" in the other columns show the summaries of the counts of transitions to the respective web pages.

"Transition-to-Page-A count" is an exemplary second action extracted from the first actions.

In Fig. 10, the count of Browsing user A's transitions to Web page A is one; the count of Browsing user B's transitions to Web page A is two; the count of Browsing user C's transitions to Web page A is two; the count of Browsing user D's transitions to Web page A is one; the count of Browsing user E's transitions to Web page A is four. In this case, the average of the counts of transitions to Web page A is calculated to be "2",

A diagram for Process stage ST2 is illustrated to describe exemplary generation of pseudo-improved data in the case where an increase by 20% of "transition count" is requested.

The value increased by 20% from the average, "2", is "2.4". An increase of the average may be obtained by deleting the data of a browsing user, whose transition count is less than or equal to the average, and adding the data of a browsing user, whose transition count is greater than the average.

In Process stage ST2, Browsing user C's data is deleted and is overwritten with Browsing user E's data.

As a result, the average of the count of transitions to Web page A, which is obtained by using the pseudo-improved data, is calculated to be "2.4". That is, a single replacement of a browsing user's data causes pseudo-improved data, which satisfies an increase by 20% of "transition count", to be prepared.

However, replacement of the data of a browsing user, whose transition count is less than the average, with the data of a browsing user, whose transition count is greater than the average, in Process stage ST1 does not always cause the average of the pseudo-improved data, which is obtained through the replacement, to satisfy the specified increase of 20%.

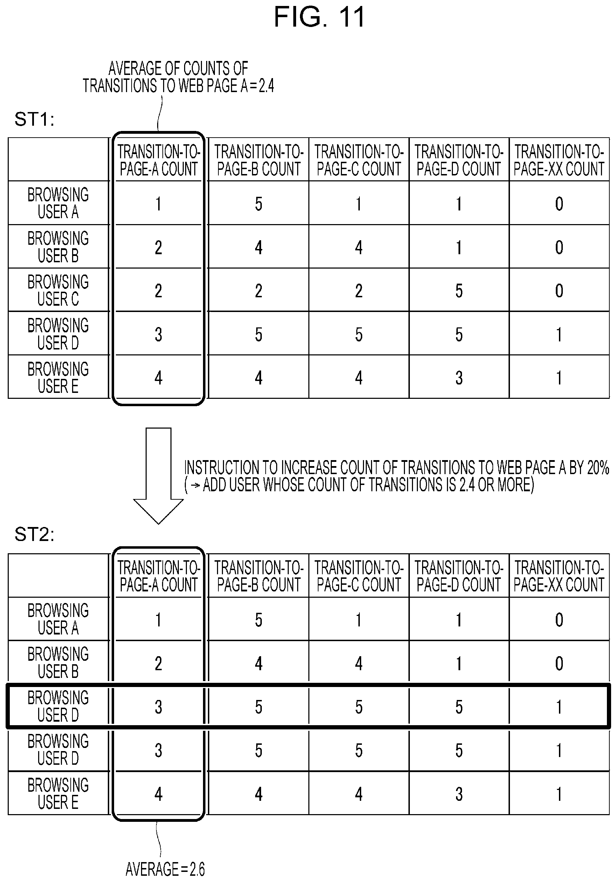

Fig. 11 is a diagram for describing another exemplary method of generating pseudo-improved data used for simulation of influence exerted on a conversion-related numeric value by a change of action-related numeric values. In Fig. 11, components corresponding to those in Fig. 10 are designated with corresponding reference numerals.

Fig. 11 also illustrates Process stage ST1 and Process stage ST2.

The difference is that Browsing user C's data is replaced with Browsing user D's data in Process stage ST2.

For convenience of description, in Fig. 11, the count of Browsing user D's transitions to Web page A is changed to "3". The other transition counts are the same as those in Fig. 10.

In Fig. 11, the data of Browsing user D, whose transition count is "3", is used as data of a browsing user whose transition count is greater than "2.4".

Thus, the average of the counts of transitions to Web page A in the generated pseudo-improved data is calculated to be "2.6".

However, the average of the generated pseudo-improved data does not satisfy the specified increase of 20% in "transition count". Therefore, until an increase of 20% in the transition count is satisfied, deletion of a browsing user's data and replicating a different browsing user's data are repeatedly performed.

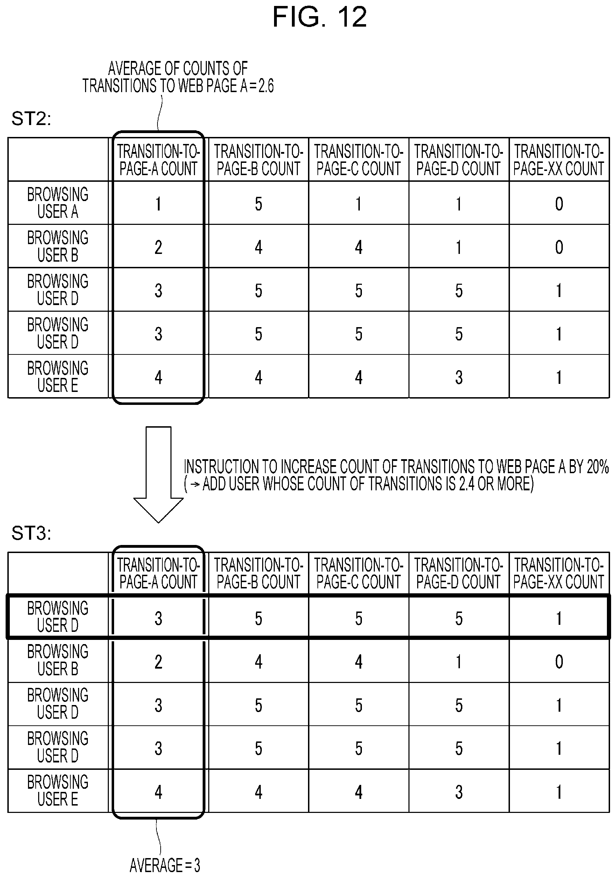

Fig. 12 is a diagram for continuously describing the other exemplary method of generating pseudo-improved data used for simulation of influence exerted on conversion-related numeric value by a change of action-related numeric values. In Fig. 12, components corresponding to those in Fig. 11 are designated with corresponding reference numerals.

Fig. 12 illustrates Process stage ST2 and Process stage ST3.

In Process stage ST3 in Fig. 12, Browsing user A' data is replaced with Browsing user D's data.

Thus, the average of the counts of transitions to Web page A in the generated pseudo-improved data is calculated to be "3". This value corresponds to an increase of 50% in "transition count", and satisfies an increase of 20%.

As described above, preparation of pseudo-improved data necessary for calculation of the amount of a change of a conversion-related numeric value is complete.

### Prediction of Conversion Improvement

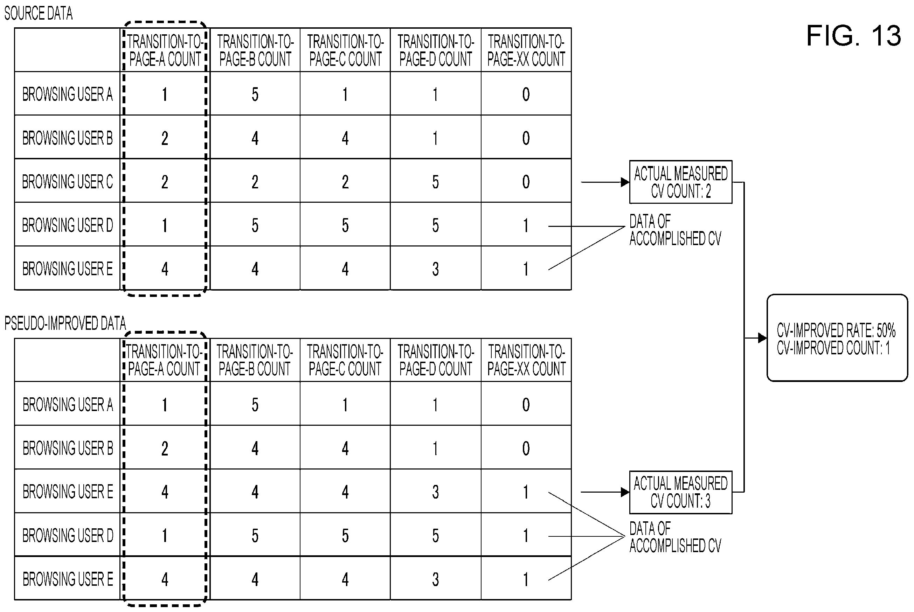

Fig. 13 is a diagram for describing an operation related to prediction of conversion improvement.

As described above, "Transition-to-Page-A count" is an action having a high degree of contribution to conversions on Web page XX. However, "Transition-to-Page-A count" is just one of actions having high degrees of contribution. The number of conversions on Web page XX is related to actions other than "Transition-to-Page-A count".

In Fig. 13, the numeric values of a second action (that is, "Transition-to-Page-A count") used in generation of pseudo-improved data are denoted as source data.

In Fig. 13, browsing users whose action histories include conversions on Web page XX are two users, Browsing users D and E. Therefore, the actual measured value of the conversion count in the source data is "2"; the actual measured value of the conversion count in the pseudo-improved data is "3".

The processor 21 (see Fig. 2) calculates the conversion-improved rate and the conversion-improved count through comparison with the requested conversion count, and displays the result on the display 36 of the information terminal 30 operated by an engineer or the like.

In Fig. 13, the conversion-improved count is "1". The conversion-improved rate is calculated to be 50% by dividing the improved count, "1", by the conversion count, "2", of the source data.

### Second Exemplary Embodiment

A second exemplary embodiment is also based on the information processing system 1 described in the first exemplary embodiment.

In the first exemplary embodiment described above, the case in which the amount of a change of the numeric value related to each of the displayed top N actions is specified to simulate influence exerted on the conversion-related numeric value by the specified change of the action is described. In the second exemplary embodiment, the relationship between assumption and result is switched. That is, the case in which the amount of a change of a conversion-related numeric value is specified to simulate the amounts of changes, which accomplish the specified change, of the top N actions will be described.

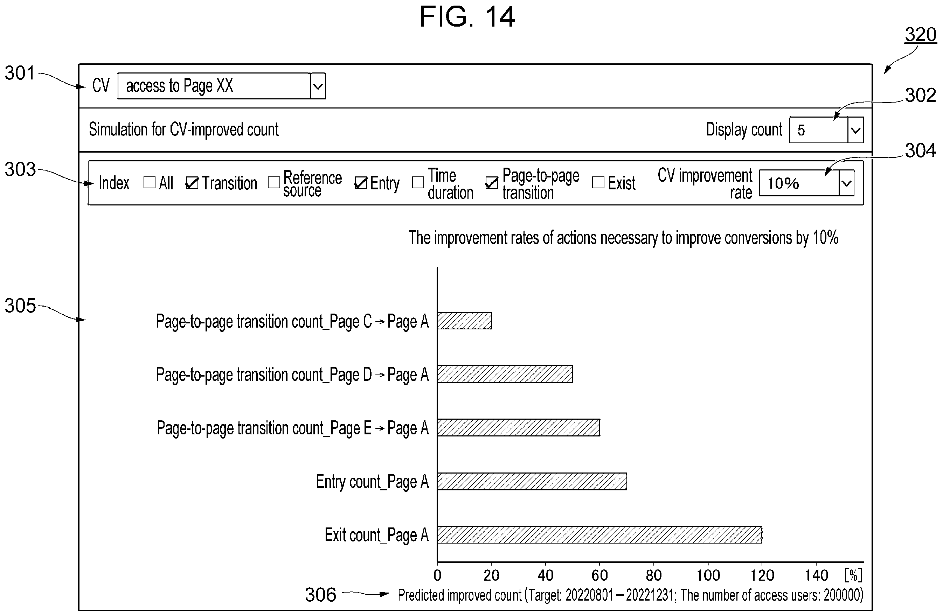

Fig. 14 is a diagram for describing an exemplary screen 320 used for input of a simulation condition and display of a simulation result. In Fig. 14, components corresponding to those in Fig. 9 are designated with corresponding reference numerals.

The screen 320 illustrated in Fig. 14 is also displayed on the display 36 (see Fig. 3) of the information terminal 30 (see Fig. 1) operated by an engineer or the like.

The difference with the screen 310 illustrated in Fig. 9 is that the title of the improvement-value input field 304 is changed to "CV improvement rate", and that actions displayed in the display field 305 are "the top N actions for achieving the conversion improvement rate".

In Fig. 14, in the conversion input field 301, "access to Page XX" is displayed; in the display-count input field 302, "5" is displayed; in the improvement-value input field 304, "10%" has been input.

Thus, the display field 305 has a title, "The improvement rates of actions necessary to improve conversions by 10%", and five actions are displayed.

In the display field 305, an action whose amount of a change of the numeric value is smaller is displayed at a higher rank. In the example in Fig. 14, "Page-to-page transition count_Page C → Page A" is displayed at the top. The length of the bar for "Page-to-page transition count_Page C → Page A" is 20%.

This indicates that, if actions of making transitions from Web page C to Web page A increase by 20%, conversions may be improved by 10%.

To achieve substantially the same improvement, actions of making transitions from Web page D to Web page A need to increase by 50%; actions of making transitions from web page E to Web page A need to increase by 60%; the count of entries to Web page A needs to increase by 70%; the count of transitions to Web page A needs to increase by 120%.

Improvement rates required for the top N actions (that is, the second actions) to satisfy the specified conversion improvement rate are extracted through the reverse calculation relationship using the method described in the first exemplary embodiment. The method will be described below.

First, various improvement rates are given to each of the top N actions to calculate the conversion-improved rates or the like.

Then, among the calculated conversion-improved rates, samples which satisfy the numeric value in the input field 304 are extracted, and the top N actions used in calculation of the extracted samples and the corresponding improvement rates are extracted.

Thorough the process described above, display of the screen 320 illustrated in Fig. 14 is implemented.

### Third Exemplary Embodiment

A third exemplary embodiment is also based on the information processing system 1 described in the first exemplary embodiment.

In the third exemplary embodiment, the case in which, in addition to the improvement rate of the top N actions, weighting of modality representing features of web pages is selectable will be described.

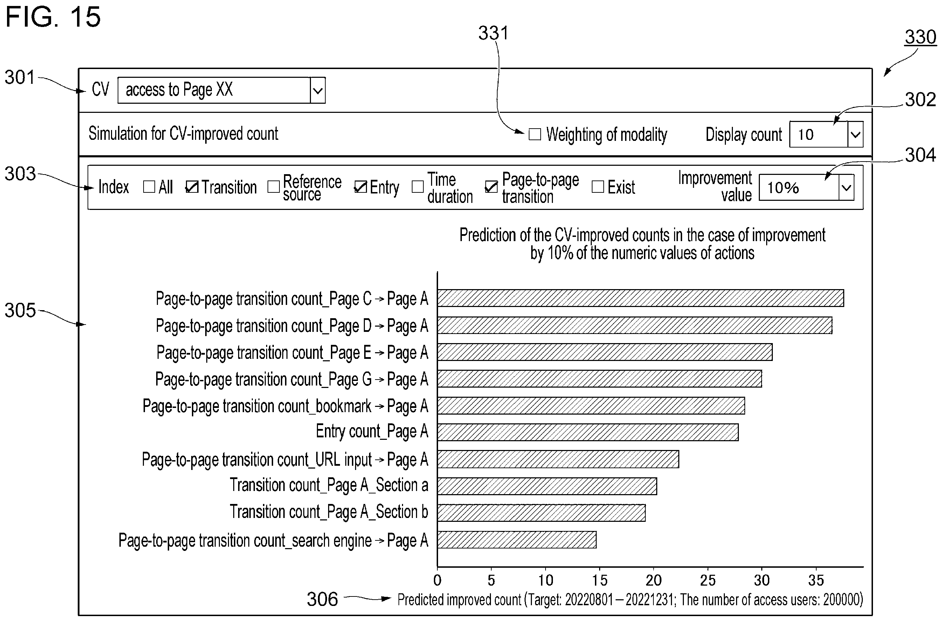

Fig. 15 is a diagram for describing an exemplary screen 330 used for input of a simulation condition and display of a simulation result. In Fig. 15, components corresponding to those in Fig. 9 are designated with corresponding reference numerals.

The screen 330 illustrated in Fig. 15 is different from the screen 310 illustrated in Fig. 9 in that a selection field 331 for specifying whether weighting of modality is enabled is additionally disposed. The other screen configurations of the screen 330 are common to those in Fig. 9.

In Fig. 15, the selection field 331 has a title, "Weighting of modality". In Fig. 15, the selection field 331 has not been checked. That is, weighting of modality has not been selected.

Thus, the display of the display field 305 in Fig. 15 is the same as that in Fig. 9.

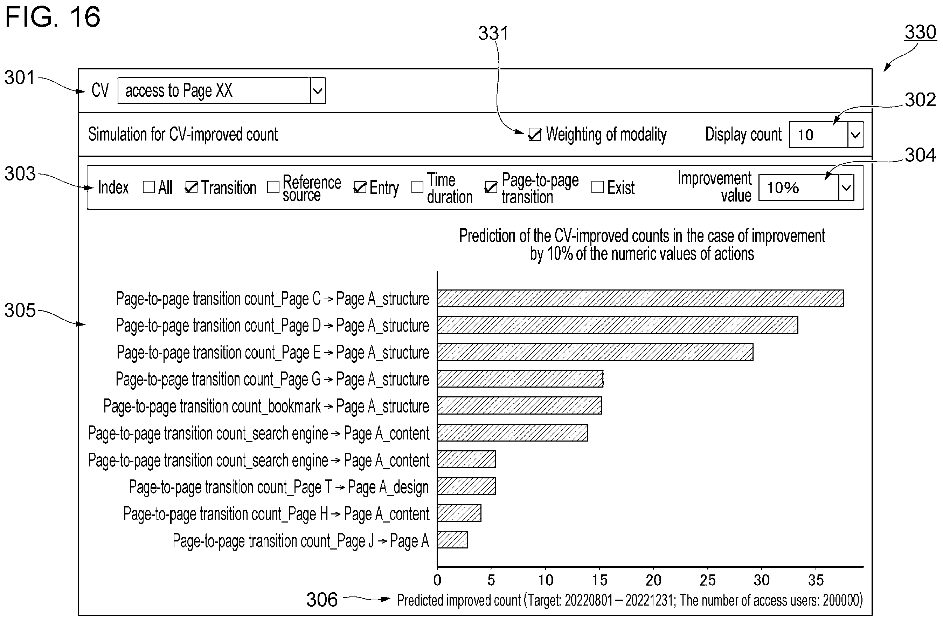

Fig. 16 is a diagram for describing a change of display of the screen 330 in the case where information about modality is added to a simulation condition. In Fig. 16, components corresponding to those in Fig. 15 are designated with corresponding reference numerals.

As described above, the selection field 331 has been checked in Fig. 16. That is, weighting of modality has been selected.

As described by using Fig. 4, modality refers to, for example, information about the page structure, the content, and the design of a web page. Therefore, enabling weighting of modality means that influence, which is exerted on conversions by the page structure, the content, and the design of a web page and an action of a browsing user, is evaluated.

Influence exerted on conversions by the modality is evaluated, for example, as follows. As an assumption of the evaluation, for example, a user sets a weighting coefficient of each modality for each action in advance.

For example, for "page-to-page transition", the weighting coefficient of "page structure" is set to 1.0; the weighting coefficient of "content" is set to 0.7; the weighting coefficient of "design" is set to 0.3.

For "entry", the weighting coefficient of "page structure" is set to 0.8; the weighting coefficient of "content" is set to 0.8; the weighting coefficient of "design" is set to 0.3.

In this setting, for page-to-page transition_(for example, Page A to Page B), 1.0 is used as the weighting coefficient representing the influence of "page structure"; for "entry page", 0.8 is used as the weighting coefficient representing the influence of "content".

The system may store these weighting coefficients as a user-changeable matrix.

In the display field 305 illustrated in Fig. 16, the order of higher-rank actions having high degrees of contribution to conversion improvement is not changed, whereas the lengths of the bars in the bar chart, which represent the degrees of conversion improvement, are changed.

For example, with addition of "structure", which is a modality, to the evaluation, the conversion-improved count in the case where "Page-to-page transition count Page D → Page A", whose conversion improvement rate is in the second rank, is improved by 10% decreases from over 35 points to less than or equal to 35 points.

For actions whose conversion improvement rate is in the fourth and lower ranks, all the improved counts decrease compared with the counts before weighting of modality.

An engineer or the like may easily grasp the relationship between actions affecting conversion improvement and the modalities, through changes of the lengths of the bars in the bar chart and a change of the arrangement of the actions.

### Fourth Exemplary Embodiment

A fourth exemplary embodiment is also based on the information processing system 1 described in the first exemplary embodiment.

In the fourth exemplary embodiment, one concrete example of the operation in step 4 (see Fig. 5) will be described.

In the fourth exemplary embodiment, the case in which the top N actions (second actions) are extracted by using a prediction model based on machine learning of the relationship between actions (first actions) included in the action histories and actions having high possibilities of leading up to conversions (that is, high degrees of contribution) will be described.

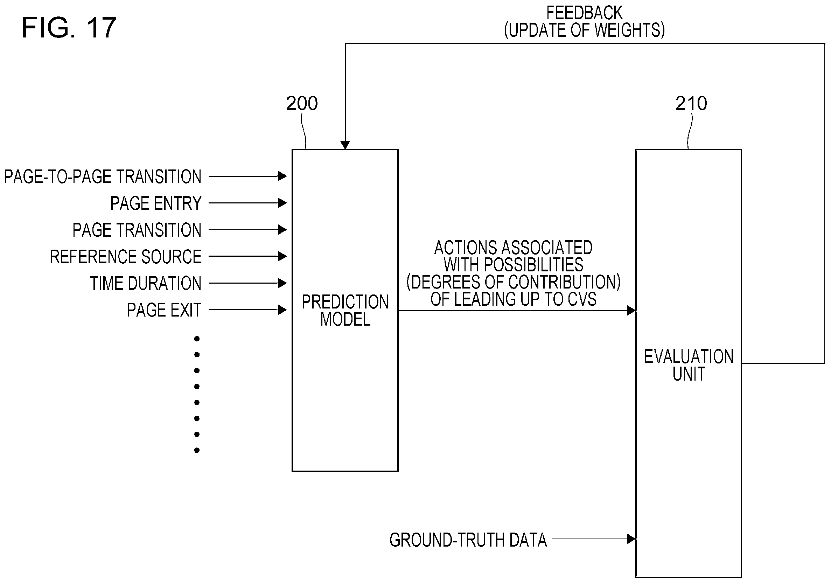

Fig. 17 is a diagram for describing the process of machine learning of a prediction model 200.

In the fourth exemplary embodiment, a learning model, for example, based on a gradient boosting decision tree (GBDT) or another decision tree is employed as the prediction model 200.

In machine learning of the prediction model 200 illustrated in Fig. 17, for example, some of the action histories obtained in step 1 (see Fig. 5) are used as training data.

The prediction model 200 illustrated in Fig. 17 is a model which has learnt the relationship whose input is any action history (that is, a group of actions (first actions)) and whose output is an association between possibilities of leading up to conversions and the actions (first actions). Such a possibility corresponds to the degree of contribution described above. Therefore, as the possibility is higher, the probability of a conversion on a specified web page gets higher.

The output from the prediction model 200 (prediction data) is provided to an evaluation unit 210, and is compared with ground-truth data. In the fourth exemplary embodiment, the comparison is referred to as evaluation.

When the evaluation unit 210 obtains the difference between the two types of data, the evaluation unit 210 updates weights, which are set to the first actions in calculation of the prediction model 200, so that the difference decreases.

For example, some of the action histories obtained in step 1 (see Fig. 5) are used as the ground-truth data.

Repeated execution of prediction using the prediction model 200 and evaluation using the evaluation unit 210 causes generation of the prediction model 200 having a high prediction accuracy.

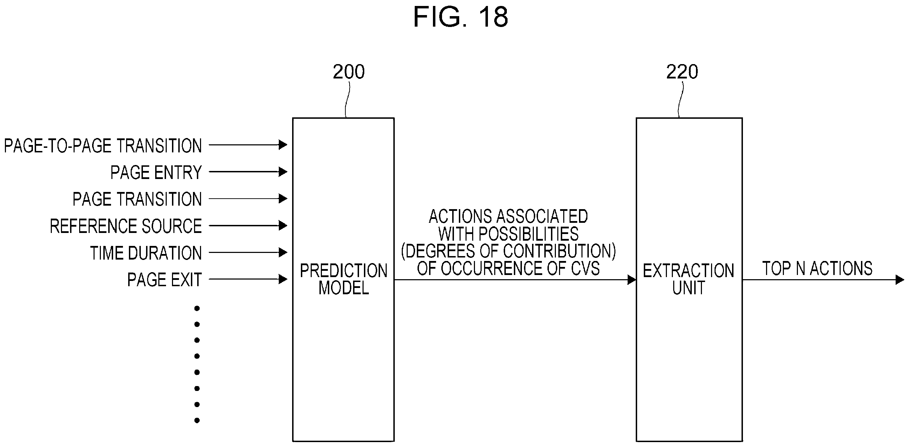

Fig. 18 is a diagram for describing a process of extracting the top N actions (second actions). In Fig. 18, components corresponding to those in Fig. 17 are designated with corresponding reference numerals.

The prediction model 200 in Fig. 18 is a learning model generated through the machine learning illustrated in Fig. 17.

When the prediction model 200 receives action histories, actions associated with possibilities of leading up to conversions are output.

An extraction unit 220 sorts the received actions in the descending order of numeric values indicating possibilities of leading up to conversions, and outputs the top N actions.

Generation of the prediction model 200 through machine learning enables accurate prediction of actions (second actions) having high possibilities of leading up to conversions, even in the case of a large number of action histories to be handled and a large number of actions included in an action history.

### Fifth Exemplary Embodiment

A fifth exemplary embodiment is also based on the information processing system 1 described in the first exemplary embodiment.

In the fifth exemplary embodiment, one concrete example of the operation in step 6 (see Fig. 5) will be described.

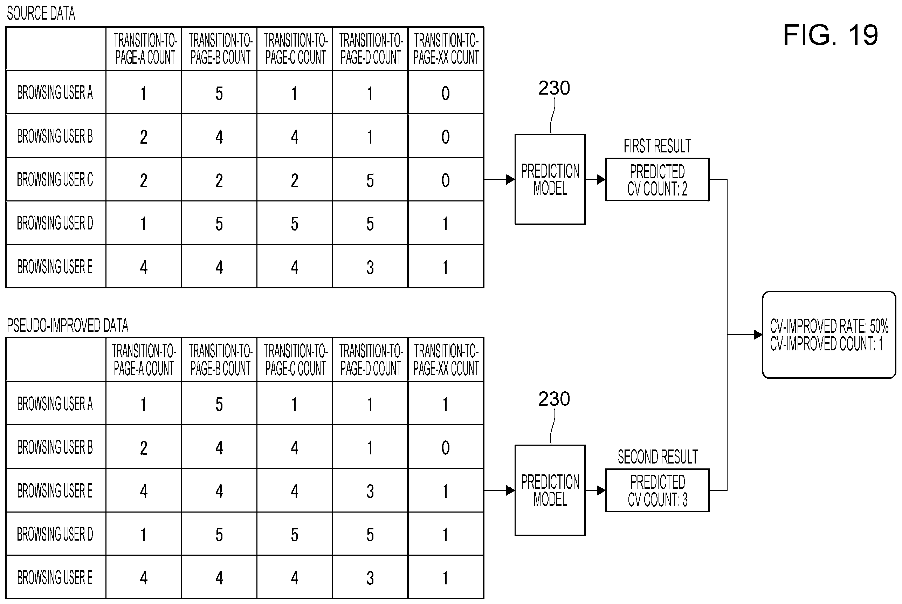

Fig. 19 is a diagram for describing an exemplary simulation of conversions using a prediction model 230. In Fig. 19, components corresponding to those in Fig. 13 are designated with corresponding reference numerals.

As the prediction model 230 illustrated in Fig. 19, for example, a learning model based on a GBDT or another decision tree is also employed.

The prediction model 230 in Fig. 19 is a learning model whose input is action histories, which are specified in the specification field 303 (see Fig. 8), in the action histories and whose output is the predicted number of accomplished conversions. "The predicted number of accomplished conversions" is an exemplary result related to conversions.

The machine learning of the prediction model 230 uses substantially the same method as that of the prediction model 200 (see Fig. 17).

In the fifth exemplary embodiment, "source data" is an exemplary first action history; "pseudo-improved data" is an exemplary second action history. Thus, a result, which is output from the prediction model 230, on "source data" is referred to as a first result; a result, which is output from the prediction model 230, on "pseudo-improved data" is referred to as a second result.

Also in Fig. 19, the conversion count of the source data is predicted to be "2"; the conversion count of the pseudo-improved data is predicted to be "3". Thus, in Fig. 19, the outputs from the prediction model 230 are illustrated as "predicted CV count: 2" and "predicted CV count: 3".

When the predicted CV counts are obtained, the processor 21 (see Fig. 2) calculates the conversion-improved rate and the conversion-improved count, which are displayed on the display 36 of the information terminal 30 operated by an engineer or the like.

Also in Fig. 19, the conversion-improved count is "1". The conversion-improved rate is calculated to be 50% by dividing the improved count, "1", by the conversion count, "2" of the source data.

In the fifth exemplary embodiment, compared with the first exemplary embodiment, the time required for calculation of a conversion count is reduced. As a result, the time required for output of a simulation result may be reduced.

### Other Embodiments

(1) The exemplary embodiments of the present disclosure are described above. The technical scope of the present disclosure is not limited to that described in the exemplary embodiments. It is clear, from the description of the scope of claims, that an embodiment obtained by adding various changes or improvements to the exemplary embodiments described above is also encompassed in the technical scope of the present disclosure.
(2) The case in which, in the screen 330 (see Fig. 15) in the third exemplary embodiment described above, whether weighting of modality is enabled is selectable in calculation of influence on conversion improvement is described. Alternatively, for each item included in the modality, for example, the page structure, the content, and the design, whether the weight of the item is present is settable. Alternatively, whether the weight of a further lower-level structure unit, for example, the link, the banner, the document, the image, the color, or the layout, is present is settable.
   Even when weighting is selected, the magnitude of the weight is settable.
(3) In the fourth and fifth exemplary embodiments described above, the case in which a gradient boosting decision tree is employed as a prediction model is described. Alternatively, a neural network including an input layer, an intermediate layer, and an output layer may be employed.
(4) In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).
   In the embodiments above, the term "processor" is broad enough to encompass one processor or plural processors in collaboration which are located physically apart from each other but may work cooperatively. The order of operations of the processor is not limited to one described in the embodiments above, and may be changed.
(5) In the exemplary embodiments described above, the task support server 20 (see Fig. 1) performs all the processes of providing a service for supporting a task of improving conversions on a web page. Alternatively, all the corresponding processes may be performed by the information terminal 30 (see Fig. 1). The processes may be performed in cooperation between the task support server 20 and an information terminal 30. That is, the processes described above may be implemented through cooperation between multiple processors.

### Appendix

(((1)) An information processing system comprising:
   one or more processors configured to:
   obtain action histories of a plurality of users on a website;
   receive setting of a conversion which is a specific action performed by the plurality of users on the website;
   extract a second action from first actions on a basis of the first actions and information about, for each action history, whether the received conversion is included in the action history, the first actions being included in the obtained action histories;
   simulate a relationship between a change of a numeric value related to the extracted second action and a change of a numeric value related to the conversion; and
   output the simulation result.
(((2))) The information processing system according to (((1))),
   wherein the one or more processors are configured to:
   in response to reception of specification of the second action, output the simulation result about the received second action.
(((3))) The information processing system according to (((1))) or (((2))),
   wherein the one or more processors are configured to:
   in response to reception of specification of a change amount of the numeric value related to the second action, output the simulation result about the received change amount of the numeric value related to the second action.
(((4))) The information processing system according to any one of (((1))) to (((3))),
   wherein the one or more processors are configured to:
   in response to reception of specification of a change amount of the numeric value related to the conversion, output, as the simulation result, a change amount of the numeric value related to the second action accomplishing the received change amount.
(((5))) The information processing system according to any one of (((1))) to (((4))),
   wherein the one or more processors are configured to:
   based on the simulation result,
   extract one or more features of a web page included in the website, and output a relationship between the one or more extracted features and a change of the numeric value related to the conversion.
(((6))) The information processing system according to (((5))),
   wherein the one or more processors are configured to:
   based on weighting calculation in accordance with the one or more features, output a relationship between change of one or more features of the web page and a change appearing in the conversion.
(((7))) The information processing system according to any one of (((1))) to (((6))),
   wherein the one or more processors are configured to:
   extract the second action on a basis of a learning model, the learning model being a model which receives an action history and which outputs a possibility that a virtual user based on the received action history does an action which is set for the conversion.
(((8))) The information processing system according to (((7))),
   wherein the one or more processors are configured to:
   update weights through learning, the weights being set for the respective first actions in a process of calculation performed by the learning model, and extract the second action on a basis of the updated weights.
(((9))) The information processing system according to any one of (((1))) to (((8))),
   wherein the one or more processors are configured to:
   provide, as input, a first action history to a learning model which receives an action history and which outputs whether a virtual user based on the received action history does an action which is set for the conversion, and obtain a first result related to the conversion on a basis of the provided first action history;
   provide, as input, a second action history to the learning model, the second action history being generated on a basis of the first action history, and obtain a second result related to the conversion on a basis of the provided second action history; and
   simulate a relationship between a change of a numeric value related to the second action and a change of a numeric value related to the conversion, on a basis of the first result and the second result.
(((10))) A program causing a computer to execute a process comprising:
   obtaining action histories of a plurality of users on a website;
   receiving setting of a conversion which is a specific action performed by the plurality of users on the website;
   extracting a second action from first actions on a basis of the first actions and information about, for each action history, whether the received conversion is included in the action history, the first actions being included in the obtained action histories;
   simulating a relationship between a change of a numeric value related to the extracted second action and a change of a numeric value related to the conversion; and
   outputting the simulation result.

Compared with a system which outputs only users' actions estimated to contribute to conversions, the information processing system according to (((1))) may provide a system which enables a user to efficiently improve a website.

The information processing system according to (((2))) enables influence, which is exerted on conversions by the specified second action, to be output as a numeric value.

The information processing system according to (((3))) enables influence, which is exerted on conversions by the specified second action, to be output as a numeric value.

The information processing system according to (((4))) enables output of the change of a numeric value related to a second action which accomplishes the specified change of a numeric value of the conversion.

The information processing system according to (((5))) enables output of the relationship between a specified change of a numeric value of the conversion and changes of numeric values related to the features of a web page.

The information processing system according to (((6))) enables output of the relationship between changes of the features of the web page and a change appearing in the conversion.

The information processing system according to (((7))) enables extraction of second actions affecting conversions even in the case of a large number of action histories that are to be handled.

The information processing system according to (((8))) achieves improvement of accuracy of extraction of second actions affecting conversions even in the case of a large number of action histories that are to be handled.

The information processing system according to (((9))) enables a reduction of time required for output of the simulation result.

Compared with a system which outputs only users' actions estimated to contribute to conversions, the program according to (((10))) may provide a system which enables a user to efficiently improve a website.

## Claims

1. An information processing system comprising:
one or more processors configured to:
obtain action histories of a plurality of users on a website;
receive setting of a conversion which is a specific action performed by the plurality of users on the website;
extract a second action from first actions on a basis of the first actions and information about, for each action history, whether the received conversion is included in the action history, the first actions being included in the obtained action histories;
simulate a relationship between a change of a numeric value related to the extracted second action and a change of a numeric value related to the conversion; and
output the simulation result.

2. The information processing system according to claim 1,
wherein the one or more processors are configured to:
in response to reception of specification of the second action, output the simulation result about the received second action.

3. The information processing system according to claim 1 or 2,
wherein the one or more processors are configured to:
in response to reception of specification of a change amount of the numeric value related to the second action, output the simulation result about the received change amount of the numeric value related to the second action.

4. The information processing system according to any one of claims 1 to 3,
wherein the one or more processors are configured to:
in response to reception of specification of a change amount of the numeric value related to the conversion, output, as the simulation result, a change amount of the numeric value related to the second action accomplishing the received change amount.

5. The information processing system according to any one of claims 1 to 4,
wherein the one or more processors are configured to:
based on the simulation result,
extract one or more features of a web page included in the website, and output a relationship between the one or more extracted features and a change of the numeric value related to the conversion.

6. The information processing system according to claim 5,
wherein the one or more processors are configured to:
based on weighting calculation in accordance with the one or more features, output a relationship between change of one or more features of the web page and a change appearing in the conversion.

7. The information processing system according to any one of claims 1 to 6,
wherein the one or more processors are configured to:
extract the second action on a basis of a learning model, the learning model being a model which receives an action history and which outputs a possibility that a virtual user based on the received action history does an action which is set for the conversion.

8. The information processing system according to claim 7,
wherein the one or more processors are configured to:
update weights through learning, the weights being set for the respective first actions in a process of calculation performed by the learning model, and extract the second action on a basis of the updated weights.

9. The information processing system according to any one of claims 1 to 8,
wherein the one or more processors are configured to:
provide, as input, a first action history to a learning model which receives an action history and which outputs whether a virtual user based on the received action history does an action which is set for the conversion, and obtain a first result related to the conversion on a basis of the provided first action history;
provide, as input, a second action history to the learning model, the second action history being generated on a basis of the first action history, and obtain a second result related to the conversion on a basis of the provided second action history; and
simulate a relationship between a change of a numeric value related to the second action and a change of a numeric value related to the conversion, on a basis of the first result and the second result.

10. A program causing a computer to execute a process comprising:
obtaining action histories of a plurality of users on a website;
receiving setting of a conversion which is a specific action performed by the plurality of users on the website;
extracting a second action from first actions on a basis of the first actions and information about, for each action history, whether the received conversion is included in the action history, the first actions being included in the obtained action histories;
simulating a relationship between a change of a numeric value related to the extracted second action and a change of a numeric value related to the conversion; and
outputting the simulation result.

11. An information processing method comprising:
obtaining action histories of a plurality of users on a website;
receiving setting of a conversion which is a specific action performed by the plurality of users on the website;
extracting a second action from first actions on a basis of the first actions and information about, for each action history, whether the received conversion is included in the action history, the first actions being included in the obtained action histories;
simulating a relationship between a change of a numeric value related to the extracted second action and a change of a numeric value related to the conversion; and
outputting the simulation result.
